(19) Europäisches Patentamt
European Patent Office
Office européen des brevets

(11) **EP 1 747 175 B1**

(12) **EUROPÄISCHE PATENTSCHRIFT**

(45) Veröffentlichungstag und Bekanntmachung des Hinweises auf die Patenterteilung:
**04.07.2012 Patentblatt 2012/27**

(21) Anmeldenummer: **05739369.6**

(22) Anmeldetag: **11.05.2005**

(51) Int Cl.:
*C03B 19/14* (2006.01)    *C03C 3/06* (2006.01)
*G21K 1/00* (2006.01)    *G03F 7/00* (2006.01)
*C03B 20/00* (2006.01)    *G02B 1/00* (2006.01)

(86) Internationale Anmeldenummer:
**PCT/EP2005/005059**

(87) Internationale Veröffentlichungsnummer:
**WO 2005/114328 (01.12.2005 Gazette 2005/48)**

(54) **QUARZGLASROHLING UND VERFAHREN ZUR HERSTELLUNG DESSELBEN**

QUARTZ GLASS BLANK AND METHOD FOR PRODUCING SAID BLANK

EBAUCHE DE VERRE DE QUARTZ ET SON PROCEDE DE PRODUCTION

(84) Benannte Vertragsstaaten:
**DE FR GB NL**

(30) Priorität: **17.05.2004 DE 102004024808**

(43) Veröffentlichungstag der Anmeldung:
**31.01.2007 Patentblatt 2007/05**

(73) Patentinhaber: **Heraeus Quarzglas GmbH & Co. KG**
**63450 Hanau (DE)**

(72) Erfinder:
• **ENGLISCH, Wolfgang**
**65779 Kelkheim (DE)**
• **TAKKE, Ralf**
**63454 Hanau (DE)**
• **KÜHN, Bodo**
**63571 Hanau (DE)**
• **UEBBING, Bruno**
**63755 Alzenau (DE)**
• **KÖPPLER, Rainer**
**63500 Seligenstadt (DE)**

(56) Entgegenhaltungen:
EP-A- 1 067 097    EP-A- 1 125 897
DE-A1- 10 054 270    DE-A1- 10 318 935

• **PATENT ABSTRACTS OF JAPAN Bd. 2000, Nr. 22, 9. März 2001 (2001-03-09) & JP 2001 122625 A (MITSUBISHI CHEMICALS CORP), 8. Mai 2001 (2001-05-08)**
• **ROBERT B. GREEGOR, FARREL W. LYTLE, DONALD R. SANDSTROM, JOE WANG, PETER SCHULTZ: "iNVESTIGATION OF TIO2- SiO2 GLASSES BY x-RAY BASORPTION SPECTROSCOPY" JOURNAL OF NON-CRYSTALLINE SOLIDS, Bd. 55, 16. Juli 1982 (1982-07-16), Seiten 27-43, XP001207851**

**Beschreibung**

Die vorliegende Erfindung betrifft einen Quarzglasrohling für ein optisches Bauteil zur Übertragung extrem kurzwelliger ultravioletter Strahlung einer Wellenlänge von 15 nm und kürzer, sowie ein Verfahren zur Herstellung des Quarzglasrohlings nach dem Oberbegriff von Anspruch 1.

Optische Bauteile aus synthetischem Quarzglas werden für die Übertragung von ultravioletter Laserstrahlung eingesetzt, beispielsweise in Form von Belichtungs- oder Projektionsoptiken von Mikrolithographiegeräten für die Herstellung hochintegrierter Schaltungen in Halbleiterchips. Die Belichtungssysteme der aktuell gebräuchlichen Mikrolithographiegeräte sind mit Excimerlasem ausgerüstet, die gepulste UV-Strahlung einer Wellenlänge von 248 nm (KrF-Laser) oder von 193 nm (ArF-Laser) abgeben. Mit derartigen Geräten können hochintegrierte Schaltungen in Halbleiterchips mit Linienbreiten von 75 nm ("half-pitch") hergestellt werden. Für eine neue Generation von hochintegrierten Schaltkreisen mit einer Linienbreite von ≤ 50 nm werden jedoch mikrolithographische Projektionsgeräte benötigt, die mit extremultraviolettem Licht (EUV), - auch "weiche" Röntgen-Strahlung genannt - mit Wellenlängen kleiner 15 nm arbeiten. Mit Hilfe dieser Strahlung und den optischen Bauteilen muss hierbei die gewünschte Struktur auf den zu strukturierenden Silizium-Wafer projiziert werden. Dabei ist eine verzerrungsfreie Übertragung der Maskenstruktur erforderlich, was ein über die gesamte Lebensdauer des Projektionsgeräte defektfreies optisches Bauteil, sowohl an der Oberfläche wie auch im Volumen des optischen Bauteils voraussetzt. Im Stand der Technik sind in derartigen Lithographiegeräten insbesondere konvexe oder konkave Spiegelelemente aus hochreinem, mit Titan dotiertem Quarzglas oder aus einer Aluminiumsilikat-Glaskeramik (Zerodur $^{TR}$) bekannt, die mit einer reflektierenden Schicht beschichtet sind. Beide Materialien zeichnen sich unter anderem durch einen extrem niedrigen thermischen Ausdehnungskoeffizienten aus. Diese Eigenschaft ist deshalb von großer Bedeutung, weil die optischen Bauteile, in der Regel Spiegelelemente, während des Belichtungsprozesses des Silizium-Wafers- aufgrund der nicht idealen Reflektivität (Reflexionsvermögens ca. 70%) derselben - durch die kurzwellige Strahlung aufgeheizt werden. Diese Erwärmung, die durchaus 50°C oder mehr betragen kann, darf jedoch keinesfalls zu einer Verformung und damit zu einer Verschlechterung der Abbildungsgüte führen. Da keine die Erwärmung kompensierende Kühlsysteme vorgesehen sind, muss die thermische Ausdehnung der optischen Bauteile praktisch gleich Null sein.

Die thermische Ausdehnung wird im Falle des Titan dotiertem Quarzglases durch die Konzentration des Dotierstoffs, durch seinen Einbau in die Glasmatrix und die thermische Historie des Bauelements bestimmt.

In Bezug auf die Konzentrationsabhängigkeit der thermischen Ausdehnung haben

- G.A. Pavlova and A.N. Amatuni in "Physicochemical Properties of Glasses with a Low Thermal Expansion Coefficient in the System SiO2-TiO2" (Neorganicheskie Materialy, Vol. 11, No. 9, pp. 1686-1689, September 1975);

- G.J. Copley, A.D. Redmond and B. Yates in "The Influence of Titania upon the Thermal Expansion of Vitreous Silica" (Physics and Chemistry of Glasses, Vol. 14, No. 4, August 1973) und

- P.C. Schultz and H.T. Smyth, ed. in "Ultra-Low-Expansion Glasses and Their Structure in the SiO2-TiO2 System" (Amorphous Materials, ed. R.W. Douglas and B. Ellis (1971), WILEY-INTERSCIENCE: London, New York, Sydney, Toronto. 453-461)

ausführliche Arbeiten veröffentlicht; -während das Thema "Einbau in die Matrix" von den Autoren Robert B. Greegor, Farrel W. Lytle, Donald R. Sandstrom, Joe Wong, and Peter Schultz in "Investigation of TiO2-SiO2 Glasses by X-Ray Absorption Spectroscopy" (Journal of Non-Crystalline Solids, 55, 1983, S. 27-43) angeschnitten wurde.

Zum Zusammenhang von Ausdehnungskoeffizient und thermischer Historie des Bauteils nehmen Y. Iwahashi, S. Kikugawa, A. Koike, N. Sugimoto in "Development of modified zero expansion Ti-dope silica glass for EUVL substrate", 2nd International Extreme Ultraviolett Symposium, 30.09. - 02.10.2003, Book of Abstracts, Stellung.

Einphasiges Glas, wie Titan dotiertes Quarzglas, hat gegenüber einer Glaskeramik den Vorteil, dass es hier unter Bestrahlung mit hochenergetischem EUV Licht nicht zu einer unterschiedlichen Veränderung von Glasmatrix und den eingebetteten Kristallen kommen kann.

Insgesamt ist festzustellen, dass die Eignung eine bestimmten Quarzglasqualität im Sinne einer Vermeidung oder zumindest Minimierung von strukturellen Schädigungen, die die Strahlenbeständigkeit reduzierten, durch lokale Stöchiometrieabweichungen und von seiner chemischen Zusammensetzung bestimmt wird. Dabei spielen mehrere Faktoren gleichzeitig eine Rolle, wobei dem Dotierstoff (Titan) eine besondere Bedeutung zukommt, während der Wasserstoff- und der OH-Gehalt im Quarzglas über die Defektzentrenbildung in Bezug auf die optischen Eigenschaften ebenfalls einen Einfluss zukommt.

Hinsichtlich des Verfahrens ist aus WO 01/08163 bekannt, dass Titan-dotiertes Quarzglas für die EUV-Lithografie durch ein Flammhydrolyse-Verfahren hergestellt wird, wobei eine Si-enthaltende und eine Ti-enthaltende Vorläuferverbindung in einer Brennerflamme zu Ti-dotierten feinteiligen $SiO_2$-Partikeln, auch "Soot" genannt, umgesetzt wird, die in einer großvolumigen Ofenmuffel abgeschieden und dort direkt zu einem massiven Quarzglasblock verglast werden. Der erhaltene Glasblock aus Tidotiertem Quarzglas hat einen Durchmesser von bis zu 1,5 Metern, bei einer Dicke von etwa 15 cm. Aus diesem Quarzglasblock werden nach eingehender Inspektion hinsichtlich eventueller Inhomogenitäten (Einschlüsse, Schlieren) defektfreie Teilstücke ausgebohrt, die dann weiteren Bearbeitungsschritten wie Schleifen, Polieren, Beschichten mit einer reflektierenden Schicht etc., die für das jeweilige optische Bauteil in dem EUV-Projektionsgerät erforderlich sind, zugeführt werden. Nachteilig hierbei ist, dass unter Umständen nur ein sehr kleiner Teil des großvolumigen Quarzglasblocks hinsichtlich der Homogenität im Ausdehnungskoeffizienten und andere Eigenschaften für die angestrebte Anwendung brauchbar ist und der Rest verworfen werden muss.

Der vorliegenden Erfindung liegt daher die Aufgabe zugrunde, einen Quarzglasrohling für ein optisches Bauteil bereitzustellen, das für die Übertragung ultravioletter Strahlung einer Wellenlänge von 15 nm und kürzer, sowie bei einer vorgegebenen Pulsenergiedichte von $\varepsilon \geq 0{,}1$ $\mu J/cm^2$, besser geeignet ist.

Weiterhin liegt der Erfindung die Aufgabe zugrunde ein rationelles, wirtschaftlich effektives Verfahren zur Herstellung eines derartigen Quarzglasrohlings anzugeben, wobei nur eine grobe Vorauswahl/Inspektion nötig ist um z.B. extreme Inhomogenitäten oder große Blasen auszuschließen.

Hinsichtlich des Quarzglasrohlings wird die vorstehende Aufgabe erfindungsgemäß durch eine Ausführungsform eines Quarzglasrohlings gelöst, der die Kombination folgender Eigenschaften aufweist.

Der Quarzglasrohling enthält

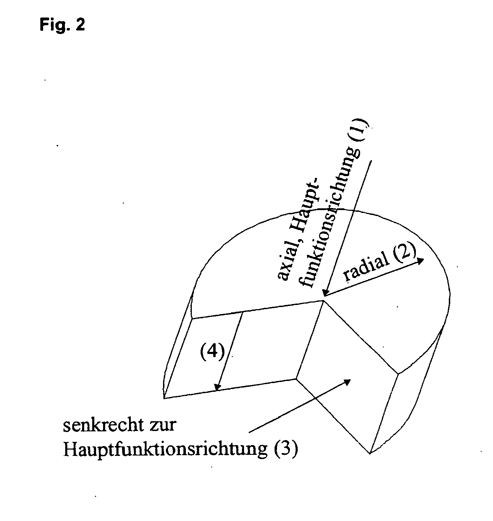

a) Mikroinhomogenitäten durch lokale Varianz der $TiO_2$-Verteilung von weniger als 0,05% $TiO_2$, gemittelt über ein Volumenelement von $(5\mu m)^3$ gegenüber dem Mittelwert des $TiO_2$-Gehalts im Quarzglasrohling,

b) eine absolute, maximale Inhomogenität im thermischen Ausdehnungskoeffizienten $\Delta\alpha$ gemittelt über die Höhe der Hauptfunktionsrichtung (Zylinderachse, siehe Fig. 2) auf der optisch genutzten Fläche CA ("Clear Aperture") des Quarzglasrohlings von weniger als 5 ppb/K,

c) einen Verlauf des nach (b) gemittelten $\Delta\alpha$ auf der optisch genutzten Fläche, der sich im wesentlichen durch die Formel (1) beschreiben läßt:

$$\Delta a = C_0^\alpha + C_3^\alpha \left( 2\left(\frac{r}{R}\right)^2 - 1 \right) + C_8^\alpha \left( 6\left(\frac{r}{R}\right)^4 - 6\left(\frac{r}{R}\right)^2 + 1 \right) \qquad (1)$$

und dessen Restinhomogenität der thermischen Ausdehnung nach Abzug von (1) nicht mehr als 0,5 ppb/K beträgt, wobei $C_0^\alpha \leq 5 ppb/K$ ;

d) eine (radiale) Varianz des thermischen Ausdehnungskoeffizienten über die nutzbare Fläche des Quarzglasrohlings von maximal 0,4 ppb / (K*cm) und

e) eine Spannungsdoppelbrechung (SDB) bei 633nm in Hauptfunktionsrichtung von maximal 2nm/cm, deren Verlauf sich im wesentlichen durch Formel (2) beschreiben läßt:

$$SDB = C_0^{SDB} + C_3^{SDB} \left( 2\left(\frac{r}{R}\right)^2 - 1 \right) + C_8^{SDB} \left( 6\left(\frac{r}{R}\right)^4 - 6\left(\frac{r}{R}\right)^2 + 1 \right) \qquad (2)$$

wobei die Variablen in den Formeln (1) und (2) folgendes bedeuten:

r= radialer Abstand von der Zylinderachse;

R= maximaler Radius der optisch genutzten Fläche auf dem Quarzglasrohling, üblicherweise als CA "clear aperture" bezeichnet.

$C_0$, $C_3$, $C_8$ = Anpassungsparameter der sphärischen Zemike-Terme, jeweils unterschiedlich in den Formeln (1) und (2) und wobei der Quarzglasrohling 5 bis 10 Gew% $TiO_2$ enthält.

Gegenüber den bisher in der Literatur beschriebenen und im Hinblick auf eine geringe Streubreite des thermischen Ausdehnungskoeffizienten $\Delta\alpha$ der für die Verwendung unter extrem ultraviolettem Licht ausgelegten Ti-dotierten Quarzglas-Qualitäten, zeichnet sich das Quarzglas, aus dem der erfindungsgemäße Rohling besteht, unter anderem durch eine besondere Verteilungsform für die verbleibenden geringen Inhomogenitäten des thermischen Ausdehnungskoeffizienten über die nutzbare Fläche des Rohlings aus, sowie den geringen Anteil an hochfrequenter Spannungsdoppelbrechung.

Es hat sich aber nämlich herausgestellt, dass im Hinblick auf die hohen Anforderungen hinsichtlich konstanter Abbildungsgüte der optischen Bauteile, nicht allein eine äußerst geringe absolute und relative Varianz des Ausdehnungskoeffizienten $\alpha$ ausreichend ist, sondern auch die Art und Weise der Verteilung des in geringen Umfang schwankenden $\alpha$ ein wesentliches Merkmal für die Qualität und Einsatzfähigkeit des Quarzglasrohlings ist.

Die minimalen Unterschiede im Ausdehnungskoeffizienten innerhalb eines Quarzglasrohlings beruhen auf bestimmten Abläufen beim Herstellen. So führt die schichtweise Abscheidung der dotierten $SiO_2$-Partikel zu einer speziellen für den Einsatzzweck nicht immer geeigneten Verteilung des Dotierstoffes Titan. Weiterhin kann die bei der Abscheidung und/oder der Verglasung bestehenden Atmosphäre Einfluss auf den Oxidationszustand des Titans im $SiO_2$-Netzwerk haben. Aus diesen Effekten resultieren schließlich minimale lokale Unterschiede im Ausdehnungskoeffizienten, die eine genaue Erfassung der Eigenschaften erforderlich machen.

Weiterhin ist es von hoher Bedeutung, dass die Verteilung der Elemente Si, O, Ti, und ggf. F, als auch von Si-OH Gruppen weitgehend homogen ist, sowie die Spannungsdoppelbrechung und ihre Gradienten minimiert sind. Schichtstrukturen senkrecht zur Hauptfunktionsrichtung werden erfindungsgemäß weitgehend vermieden und Einschlüsse oder/und Blasen sind selbstverständlich nicht akzeptabel und treten bei dem erfindungsgemäßen Quarzglasrohling praktisch nicht auf oder werden gegebenenfalls aus dem Ausgangsmaterial durch das erfindungsgemäße Homogenisierverfahren entfernt.

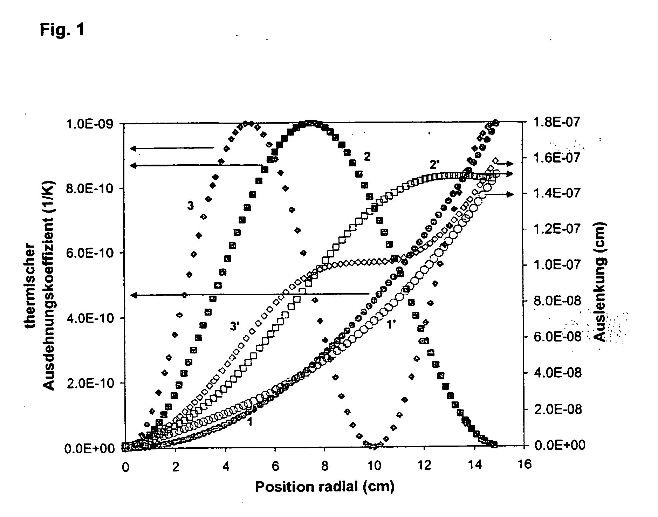

Im Hinblick auf möglichst auszuschließende Abbildungsfehler ist insbesondere die Deformation des Spiegels bei Erwärmung zu beachten. Eine optimierte Verteilung des Ausdehnungskoeffizienten gemäß Formel (1) wirkt sich nämlich auf die Deformation wie dargestellt in Figur 1 aus:

Inhomogenitäten des thermischen Ausdehnungskoeffizienten führen im wesentlichen am Rand zu einer niederfrequenten Verbiegung der Spiegeloberfläche, was durch aktive Korrekturmaßnahmen beherrschbar ist. Derartige Korrekturmaßnahmen werden beispielsweise bei sehr großen Teleskopen (Bsp.: VLT 'verb large telescope') durch sogenannte Aktuatioren vorgenommen, die Deformationen des Spiegels ausgleichen.

Willkürliche oder hochfrequente (eng beieinander liegende) Inhomogenitäten führen dagegen zu einem erheblichen Versatz an jedem Punkt der Oberfläche was nicht oder nur mit erheblichen Aufwand ausgeglichen werden kann.

Die Optimierung des Verlaufs des Ausdehungskoeffizienten in Kombination mit einer Minimierung von Mikroinhomogenitäten und Schichten, welche die Polierbarkeit beeinträchtigen können, ermöglicht den Einsatz des Quarzglasrohlings als optisches Bauteil für die EUV-Lithographie.

Weitere vorteilhafte Ausführungsformen der Erfindung sind in den Unteransprüchen enthalten.

Erfindungsgemäß wird der Dotierstoff Titan eingeführt, wobei $TiO_2$ im Bereich zwischen 5 bis 10 Gew %. Gegebenfalls ist Fluor im Bereich zwischen 4 bis 6 Gew % auch im Quarzglas enthalten. Bei einer Kombination der beiden vorgenannten Dotierstoffe gilt zweckmäßigerweise die Bemessungsformel (3) für die Ermittlung des Fluor-Gehalts:

$$\text{Fluorgehalt [Gew. \%]} = 4{,}5 - 0{,}614 \cdot TiO_2 \text{ Gehalt [Gew. \%]} \hspace{2cm} (4)$$

Außerdem beträgt die Spannungsdoppelbrechung (SDB) bei 633nm senkrecht zur Hauptfunktionsrichtung (Zylinderachse) maximal 5nm/cm, wobei der wesentliche Anteil auf niederfrequente Anteile entfällt, deren Gradient 50 (nm/cm) /cm nicht übersteigt. Die Meßauflösung beträgt entsprechend der Größe des Laser-Meßflecks 1 mm. Da für die Erfindung in erster Linie optische Bauteile mit gekrümmten Oberflächen (sphärische Spiegel) relevant sind, muss die Spannungsdoppelbrechung abhängig vom Krümmungsradius auch senkrecht zur Funktionsrichtung ermittelt und optimiert werden (zu den Funktionsrichtungen siehe auch Fig. 2). Das Merkmal der SDB dient aber auch zur Charakterisierung der Schichtfreiheit.

In einer bevorzugten Ausführungsform weist der Quarzglasrohling - bedingt durch den Herstellprozess mit Direktverglasung (sogenanntes DQ-Verfahren) einen mittleren OH-Gehalt im Bereich von 700 Gew-ppm bis 1000 Gew-ppm auf, wobei die Variation des über die Dicke des Quarzglasrohlings gemittelten (entspricht der Funktionsrichtung (4) aus Fig. 2) OH-Gehaltes in der Fläche der Hauptfunktionsrichtung $\pm$ 50 ppm nicht übersteigt. Eine derart geringe Varianz im OH-Gehalt ist erforderlich um die optischen, wie auch die thermischen Eigenschaften des Quarzglases möglichst homogen zu halten.

Als weiteres vorteilhaftes Merkmal im Zusammenhang mit dem erfindungsgemäßen Quarzglasrohling, hat sich die Einstellung der strukturellen Temperatur $T_f$ bei < 950°C erwiesen, da dies zu einer weiteren Reduktion der thermischen Ausdehnung im Vergleich zu einem Rohling mit gleicher Zusammensetzung aber höherer fiktiver Temperatur führt. Die angegebene Obergrenze von 950°C für die fiktive Temperatur betrifft nur Quarzglasqualitäten mit einem relativ hohen OH-Gehalt. Liegt der OH-Gehalt etwa kleiner als 300 Gew. ppm muss eine fiktive Temperatur von größer 1000°C angesetzt werden.

Hinsichtlich des Verfahrens zur Herstellung eines Quarzglasrohlings wird die oben angegebene Aufgabe ausgehend von dem eingangs genannten Verfahren erfindungsgemäß dadurch gelöst, dass ein durch Flammenhydrolyse einer Siliziumenthaltenden und einer Titan-enthaltenden und/oder Fluor-enthaltenden Verbindung erhaltenes dotiertes Quarzglas als großvolumiger, stangenförmiger Ausgangskörper zu einem homogenen Quarzglasrohling mittels mehrerer Umformschritte umgeformt und homogenisiert wird, wobei der Ausgangskörper zunächst zwischen zwei Halterungen gehalten zonenweise auf Schmelztemperatur gebracht wird und dabei die erhitzte Zone durch Relativbewegung der beiden Halterungen zueinander durchgearbeitet wird, so dass ein im wesentlichen zylinderförmiger Drillkörper entsteht, der anschließend in mindestens einem weiteren Umformschritt in einer aufheizbaren Form erweicht und unter einer in Achsrichtung wirkenden Kraft in der Form zu einem Quarzglasrohling verformt wird.

Der zylinderförmige Drillkörper, der durch zonenweises Erhitzen und Durcharbeiten bei Schmelztemperatur entsteht, wird in seiner Längsachsenrichtung noch Inhomogenitäten aufweisen, die durch mindestens eine weitere Umformung entfernt werden müssen. Dazu wird der Drillkörper in eine aufheizbare Form gestellt, in der er unter Eigengewicht oder unter einer zusätzlichen, in Achsrichtung wirkenden Kraft zu einer mehr oder weniger dicken Platte erweicht. Anstelle des langsamen Einsinkens des Drillkörpers in einer aufgeheizten Form, kann die gleiche Verformung auch dadurch erreicht werden, dass der Drillkörper kontinuierlich einer Erhitzungszone zugeführt wird und dort im mittleren Bereich seiner Länge in einer im Erhitzungsbereich angeordneten Form erweicht. In der so erhaltenen Platte befinden sich die Inhomogenitätsschichten noch im wesentlichen in der gleichen relativen Lage wie im Drillkörper. Zur weiteren Homogenisierung kann daher die Platte anschließend entweder direkt als Ausgangskörper für ein erneutes Verdrillen dienen, - oder die Platte wird zunächst zu einer Stange umgeformt, die danach erst wieder einem weiteren Verdrillprozess zugeführt wird. Ist der Homogenisierungsgrad durch gegebenenfalls mehrere Wiederholungen der vorgenannten Umform- und Durchmischungsprozeduren ausreichend fortgeschritten, erfolgt eine abschließende Formgebung des Drillkörpers zu einem Quarzglasrohling, aus dem dann das gewünschte optische Bauteil ausgeschnitten und durch Schleifen und Polieren endbearbeitet wird.

Die Halterungen für den Verdrillprozess und der Ausgangskörper bestehen zweckmäßigerweise aus dem gleichen Quarzglasmaterial. Dies ist im Hinblick auf die Verhinderung von mechanischen Spannungen an der Ansatzstelle zwischen Ausgangskörper und Halterung beim Erhitzen vorteilhaft, da es sonst im ungünstigsten Fall zum Abriss der Halterung führen kann. Weiterhin wird durch die Einheitlichkeit des Materials der Eintrag von Fremdelementen verhindert.

Nachfolgend wird die Erfindung anhand von Ausführungsbeispielen und anhand von Zeichnungen näher erläutert: Dabei zeigt

Fig. 1 :      eine Graphik zur (inhomogene) Verteilung des thermische Ausdehnungskoeffizienten gegenüber dem dadurch verursachten Versatz der Volumenelemente;

Fig. 2:      die Geometrie einer Spiegelsubstratplatte mit ihren Funktionsrichtungen;

Fig. 3A, 3B, 3C :      den Verlauf von $\Delta\alpha$ in Hauptfunktionsrichtung gemäß Formel (1);

Fig. 4A, 4B :      den Verlauf der Spannungsdoppelbrechung als Draufsicht im Schattenbild - und im radialen Schnitt;

Fig 5A, 5B :      den Verlauf der Spannungsdoppelbrechung als radialen Schnitt im Schattenbild und in zwei weiteren Schnittebenen;

Fig. 6 : (A)      Schattenaufnahme von nicht homogenisiertem Corning ULE™

(B)      Schattenaufnahme von homogenisiertem Corning ULE™.

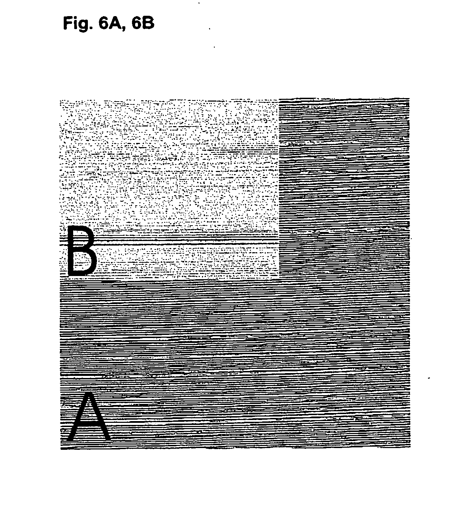

Als Ausgangsmaterial wird ein synthetisches Quarzglas der Fa. Corning mit der Bezeichnung ULE™ eingesetzt. Diese Materialqualität enthält als Dotierstoff ca. 7 Gew. % $TiO_2$. Ein quaderförmiges Probestück dieses Ausgangsmaterials wird hinsichtlich der hier relevanten Größen vermessen. Es wird dabei eine maximale Varianz des $TiO_2$-Gehaltes von 0,6 Gew % über die Länge der Probe festgestellt. Es fällt weiterhin eine deutlich sichtbare Schichtung in zwei Betrachtungsrichtungen des quaderförmigen Probestücks auf, während die dritte Richtung klar und im Wesentlichen ohne Schichtstrukturen, jedoch mit Varianzen im thermischen Ausdehnungskoeffizienten $\alpha$ mit bis zu 60 ppb/K erscheint. Die Schichtung wird als Schattenaufnahme mit Fig. 6A augenscheinlich dargestellt und beruht auf dem schichtweisen Aufbauprozess für das Quarzglas. Auch im Hinblick auf die Spannungsdoppelbrechung wird ein richtungsabhängiger Spannungsverlauf in radialer Richtung ermittelt, der Rückschlüsse auf den Aufbauprozess des ursprünglich großvolumigen Quarzglaskörpers, aus dem das Probestück entnommen wurde, zulässt. Es werden dabei an dem Probestück des Ausgangsmaterials Unterschiede im Spannungsverlauf von bis zu 20 nm/cm ermittelt.

Der OH-Gehalt des ULE™- Glases wird mit 840 Gew ppm gemessen; der Wasserstoffgehalt liegt bei etwa $2 \times 10^{18}$ Moleküle/cm$^3$ und die fiktive Temperatur $T_f$ bei ca. 910°C.

Nachdem somit die Ausgangsdaten des Ti-dotierten Quarzglas festgestellt sind, wird nun ein größerer stangenförmiger Ausgangskörper mit den Grundmaßen 90 x 90 x 1000 mm für das Homogenisieren vorbereitet. Dazu werden zunächst die Endstücke des Ausgangskörpers rundgeschliffen und an jedem Ende eine Quarzglas-Halterung, sogenannte "Pfeife" angeschweißt. Die Pfeifen bestehen ebenfalls aus Ti=dotiertem Quarzglas, so dass keine Unterschiede im Ausdehnungsverhalten der Halterungen und vom Original-Ausgangskörper zu erwarten sind. Der so präparierte Ausgangskörper wird in eine Drillbank (Drehbank ähnliche Maschine mit Möglichkeit der lokalen Erhitzung) eingespannt und um seine Längsachse verdrillt, wobei eine Partie des Ausgangskörpers durch Brenner auf über 2000°C erhitzt wird. Die erweichte Glasmasse wird durch die Relativbewegung der beiden Halterungen zueinander unter Bildung eines Drillkörpers in radialer Richtung intensiv durchmischt. Der Drillkörper hat einen Durchmesser (Ø) von etwa 100 mm und eine Länge von 450 mm. Die Relativbewegungen umfassen eine synchrone oder asynchrone Rotation mit einer überlagerten Bewegung der Halterungen parallel zur Längsachse des Ausgangskörpers. Inhomogenitäten oder Schichten in radialer Richtung werden durch diesen Vorgang entfernt, dagegen bleiben Inhomogenitäten, die sich in Längsrichtung des Ausgangskörpers erstrecken, als Schlieren oder Schichten erhalten. Es folgt daher mindestens ein weiterer Umformschritt, in dem der im wesentlichen zylinderförmige Drillkörper in eine Form gegeben wird, in der er unter entsprechender Hitzeeinwirkung (Temperatur ca. 1800°C) und seinem Eigengewicht in sich zusammensackt. Es wird somit aus dem Drillkörper eine Platte mit einem Durchmesser von etwa 350 mm und einer Höhe von ca. 70 mm geformt. Diese Platte wird durch Entfernen der Randpartien und parallel Schleifen der beiden Deckflächen für die Messung der Homogenitätskenngrößen vorbereitet.

Dabei ergibt sich eine homogenisierte Quarzglasplatte für ein Spiegelsubstrat mit den Abmessungen Ø 300 x 40mm mit verschiedenen radialen Verteilungen des Koeffizienten der thermischen Ausdehnung, wie dargestellt in Fig. 1. Der Spiegel wird (rein rechnerisch) homogen um 20K aufgeheizt. Durch die nicht verschwindende thermische Ausdehnung kommt es zur Auslenkung (-> "Versatz") der einzelnen Volumenelemente gegenüber der "Soll-" Lage ohne Temperaturerhöhung. Der Versatz ist für die Mittelebene des Substrats dargestellt, der Versatz ändert sich nur gering mit der Höhe im Substrat. Die Kurven 1, 2, 3 stellen die verschiedenen Verteilungen der thermischen Ausdehnung, die Kurven 1', 2', 3' den resultierenden Versatz dar. Eine parabolische Verteilung der thermischen Ausdehnung stellt sich dabei als vorteilhaft gegenüber stärker oszillierenden Verteilungen dar, da in der Summe die Auslenkung geringer ist und eventuelle Korrekturen durch aktive Elemente einfacher eingebracht werden können. Zur Verdeutlichung der Geometrie der Spiegelsubstratplatte und ihrer Hauptfunktionsrichtung wird auf Fig. 2 verwiesen, wobei die mit (1) bezeichnete Richtung die axiale Haupt-funktionsrichtung bezeichnet und die mit (2) und (3) bezeichneten Richtungen Funktionsrichtungen senkrecht zu (1) darstellen. Mit (4) ist die Richtung bezeichnet, mit der ein Wert über die Substratdicke gemittelt festgestellt wird.

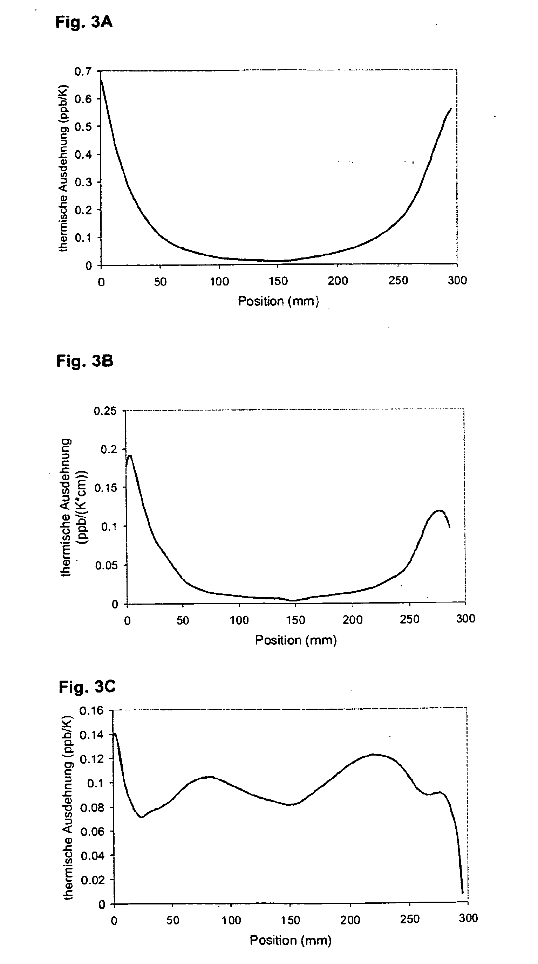

Weiterhin ist in Fig. 3A der Verlauf des Absolutwertes des thermischen Ausdehnungskoeffizienten $\alpha$ in Hauptfunktionsrichtung über den Durchmesser der homogenisierten Spiegelsubstratplatte dargestellt. Es ist ein sehr homogener Verlauf erkennbar, wobei lediglich am Rand der Platte "größere" Abweichungen von bis zu 0,6 ppb/K festgestellt werden.

Fig. 3B zeigt die Meßergebnisse in Bezug auf den Verlauf des gemittelten Gradienten des thermischen Ausdehnungskoeffizienten $\Delta\alpha$ auf der optischen Fläche der Spiegelsubstratplatte in Hauptfunktionsrichtung. Auch hier sind die oben beschriebenen negativen "Randeffekte" zu beobachten, aber abgesehen davon ist eine nur minimale Änderung von $\Delta\alpha$ in der zentralen Fläche der Probe festzustellen.

Mit Fig. 3C schließlich wird der Verlauf der sogenannten Restinhomogenität in Bezug auf den Ausdehnungskoeffizienten wiedergegeben nach Abzug von Formel (1). Die Restinhomogenität von $\Delta\alpha$ beträgt 0,07 ppb/K.

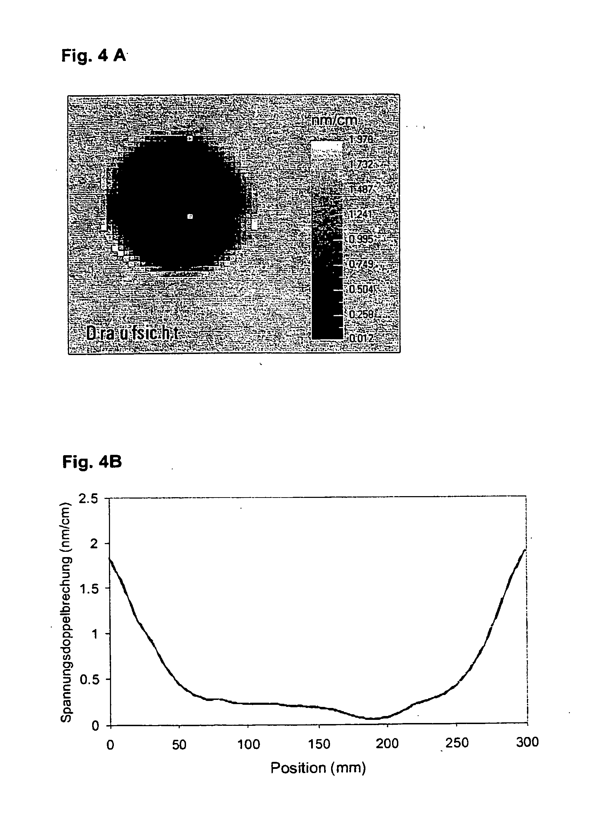

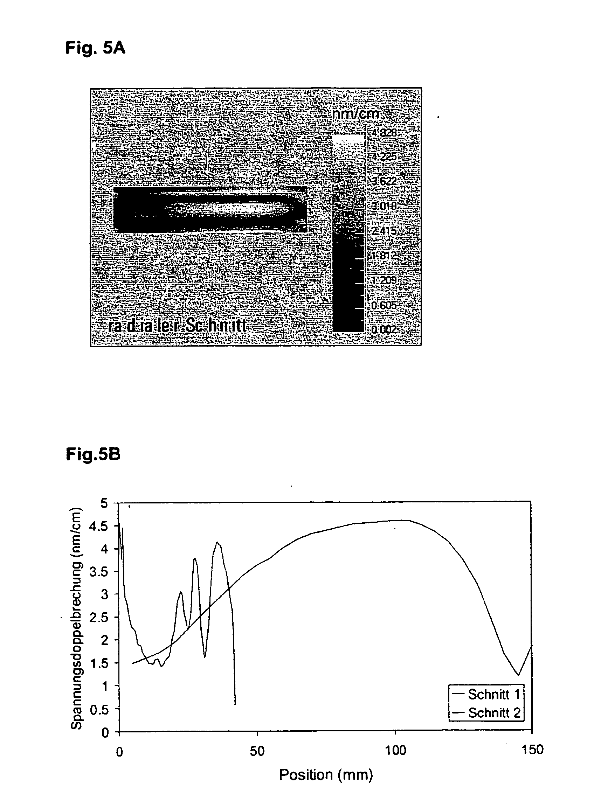

Der Verlauf der Spannungsdoppelbrechung ist in den Figuren 4A, 4B und 5A, 5B dargestellt. Die Darstellung in Draufsicht lässt, - abgesehen von den "Randeffekten"-unter Heranziehen der entsprechenden Graustufenskala eine im wesentlichen spannungsfreie Platte erkennen. Die Randeffekte können auf Verspannungen am Rand der Probe zurückgeführt werden, die durch die mechanische Endbearbeitung der Platte verursacht sind. Der Verlauf der SDB über den Durchmesser der Platte (radiale Schnittrichtung entsprechend Fig. 2) der zylindrischen Probeplatte wird in Fig. 4B gezeigt.

Fig. 5A zeigt den Spannungsverlauf einer Hälfte eines diametralen Schnitts der Spiegelsubstratplatte, wobei hier eine gewisse Schichtung erkennbar ist. Mit Fig. 5B wird diese Schichtung anhand des Verlaufs der SDB in zwei Schnittrichtungen besser verdeutlicht. Die SDB-Kurve von Schnitt 1 verläuft über die Dicke der Platte, etwa in der Mitte des diametralen Schnitts. Schnitt 2 dagegen verläuft radial, etwa in der Mitte der Platte.

Die Schattenaufnahme von Fig. 6B zeigt einen weitgehend von Schichten befreiten Quarzglasrohüng. Deutlich wird diese Verbesserung insbesondere im direkten Vergleich zum Ausgangszustand, abgebildet in Fig. 6A.

Darüber hinaus ist die Varianz des $TiO_2$-Gehalte nach dem Homogenisieren wesentlich verbessert worden und beträgt über die Fläche der Spiegelsubstratplatte nur noch maximal 0,05 Gew. %, gegenüber der anfänglichen Varianz im $TiO_2$-Gehalt von 0,6 Gew %.

Die Meßergebnisse an der Spiegelsubstratplatte belegen den Erfolg des erfindungsgemäßen Homogenisierverfahrens und damit die Eignung des Materials zum Einsatz in der EUV-Lithographie.

**Patentansprüche**

1. Quarzglasrohling für ein optisches Bauteil zur Übertragung von Strahlung einer Wellenlänge von 15 nm und kürzer aus einem hochreinen, mit Titan oder einer Kombination von Titan und Fluor dotiertem Quarzglas, das durch folgende Merkmale gekennzeichnet ist:

   a) Mikroinhomogenitäten durch lokale Varianz der $TiO_2$-Verteilung von weniger als 0,05% $TiO_2$, gemittelt über ein Volumenelement von $(5 \, \mu m)^3$ gegenüber dem Mittelwert des $TiO_2$-Gehalts im Quarzglasrohling,
   b) eine absolute, maximale Inhomogenität im thermischen Ausdehnungskoeffizienten $\Delta\alpha$ in Hauptfunktionsrichtung auf der optischen genutzten Fläche CA des Quarzglasrohlings von weniger als 5 ppb/K,
   c) ein Verlauf des nach (b) gemittelten $\Delta\alpha$ auf der optischen Fläche, der sich im wesentlichen durch die Formel (1) beschreiben läßt:

$$\Delta a = C_0^\alpha + C_3^\alpha \left( 2\left(\frac{r}{R}\right)^2 - 1 \right) + C_8^\alpha \left( 6\left(\frac{r}{R}\right)^4 - 6\left(\frac{r}{R}\right)^2 + 1 \right) \tag{1}$$

   und dessen Restinhomogenität der thermischen Ausdehnung nach Abzug von (1) nicht mehr als 0,5 ppb/K beträgt, wobei $C_0^\alpha \leq$ 5ppb/K;
   d) eine radiale Varianz des thermischen Ausdehnungskoeffizienten über die nutzbare Fläche des Quarzglasrohlings von maximal 0,4 ppb / (K*cm) und
   e) eine Spannungsdoppelbrechung (SDB) bei 633nm in Hauptfunktionsrichtung von maximal 2nm/cm, deren Verlauf sich im wesentlichen durch Formel (2) beschreiben läßt:

$$SDB = C_0^{SDB} + C_3^{SDB} \left( 2\left(\frac{r}{R}\right)^2 - 1 \right) + C_8^{SDB} \left( 6\left(\frac{r}{R}\right)^4 - 6\left(\frac{r}{R}\right)^2 + 1 \right) \tag{2}$$

   wobei r = radialer Abstand von Zylinderachse;
   R = maximaler Radius der optisch genutzten Fläche CA;
   $C_0$, $C_3$, $C_8$ = Anpassungsparameter der sphärischen Zemike-Terme;
   und wobei der Quarzglasrohling 5 bis 10 Gew.% $TiO_2$ enthält.

2. Quarzglasrohling nach Anspruch 1, **dadurch gekennzeichnet, dass** bei einer linearen Kombination der Dotierstoffe $TiO_2$ und Fluor die folgenden Bemessungsregel (3) gilt:

$$\text{Fluorgehalt [Gew. \%]} = 4,5 - 0,614 \cdot TiO_2 \text{ Gehalt [Gew. \%]} \tag{3}$$

3. Quarzglasrohling nach Anspruch 1 oder 2, **dadurch gekennzeichnet, dass** die Spannungsdoppelbrechung bei 633nm senkrecht zur Hauptfunktionsrichtung 5nm/cm nicht übersteigt, wobei der wesentliche Anteil auf niederfrequente Anteile entfällt, deren Gradient 50(nm/cm) /cm nicht übersteigt.

4. Quarzglasrohling nach einem der Ansprüche 1 bis 3, **dadurch gekennzeichnet, dass** der Quarzglasrohling einen mittleren OH-Gehalt im Bereich von 700 Gew-ppm bis 1000 Gew-ppm aufweist, wobei die Variation des über die Dicke des Quarzglasrohlings gemittelten OH-Gehaltes in der Fläche der Hauptfunktionsrichtung $\pm$ 50 ppm nicht übersteigt.

5. Quarzglasrohling nach einem der Ansprüche 1 bis 4, **dadurch gekennzeichnet, dass** die fiktive Temperatur $T_f$ des Quarzglasrohlings 950°C nicht übersteigt.

6. Verfahren zur Herstellung eines Quarzglasrohlings nach einem der Ansprüche 1 bis 5 umfassend Umformen eines durch Flammenhydrolyse einer Siliziumenthaltenden und einer Titan-enthaltenden oder Titan- und Fluor-enthaltenden Verbindung erhaltenes dotiertes Quarzglas als großvolumiger, stangenförmiger Ausgangskörper zu einem homogenen Quarzglasrohling mittels mehrerer Umformschritte, wobei der Ausgangskörper zunächst zwischen zwei Halterungen gehalten zonenweise auf Schmelztemperatur gebracht wird und dabei die erhitzte Zone durch Relativbewegung der beiden Halterungen zueinander durchgearbeitet wird, so dass ein im wesentlichen zylinderförmiger Drillkörper entsteht, der anschließend in mindestens einem weiteren Umformschritt in einer aufheizbaren Form erweicht und unter einer in Achsrichtung wirkenden Kraft in der Form zu einem Quarzglasrohling verformt wird.

7. Verfahren zur Herstellung eines Quarzglasrohlings nach Anspruch 6, **dadurch gekennzeichnet, dass** die Halterungen und der Ausgangskörper aus dem gleichen Quarzglasmaterial bestehen.

**Claims**

1. A quartz glass blank for an optical component for transferring radiation of a wavelength of 15 nm or shorter, made from a highly pure quartz glass doped with titanium, or a combination of titanium and fluorine, **characterized by** the following characteristics:

   a) micro-inhomogeneities by means of local variance of the $TiO_2$ distribution of less than 0.05% $TiO_2$, averaged over a volume element of $(5\ \mu m)^3$ as opposed to the mean value of the $TiO_2$ content within the quartz glass blank,
   b) an absolute maximum inhomogeneity within the coefficient of thermal expansion $\Delta\alpha$ in the main functional direction on the optically utilized surface CA of the quartz glass blank of less than 5 ppb/K,
   c) a course of the $\Delta\alpha$ averaged according to (b) on the optical surface, essentially being described by formula (1):

$$\Delta a = C_0^\alpha + C_3^\alpha\left(2\left(\frac{r}{R}\right)^2 - 1\right) + C_8^\alpha\left(6\left(\frac{r}{R}\right)^4 - 6\left(\frac{r}{R}\right)^2 + 1\right) \tag{1}$$

   and the residual inhomogeneity of the thermal expansion of which is not more than 0.5 ppb/K after the extraction of (1), wherein $C_0^\alpha \leq 5$ ppb/K;
   d) a radial variance of the coefficient of thermal expansion across the utilizable surface of the quartz glass blank of a maximum of 0.4 ppb/(K'cm), and
   e) a stress double refraction (SDB) at 633 nm in the main functional direction of a maximum of 2 nm/cm, the course of which can essentially be described by formula (2):

$$SDB = C_0^{SDB} + C_3^{SDB}\left(2\left(\frac{r}{R}\right)^2 - 1\right) + C_8^{SDB}\left(6\left(\frac{r}{R}\right)^4 - 6\left(\frac{r}{R}\right)^2 + 1\right) \tag{2}$$

   wherein r = radial distance from the cylinder axis;
   R = maximum radius of the optically utilized surface CA;
   $C_0$, $C_3$, $C_8$ = adjustment parameters of the spherical Zernike terms;
   and wherein the quartz glass blank contains 5 to 10% by weight of $TiO_2$.

2. The quartz glass blank according to claim 1, **characterized in that** with a linear combination of the dopants $TiO_2$ and fluorine, the following dimensioning rule (3) applies:

Fluorine content [weight by %] = 4.5 − 0.614 · TiO$_2$ content [weight by %]

3. The quartz glass blank according to claims 1 or 2, **characterized in that** the stress double refraction does not exceed 5 nm/cm at 633 nm perpendicular to the main functional direction, wherein the substantial portion falls upon the low-frequency portions, the gradient of which does not exceed 50 (nm/cm)/cm.

4. The quartz glass blank according to one of the claims 1 to 3, **characterized in that** the quartz glass blank has a mean OH content within the range of 700 ppm by weight to 1000 ppm by weight, wherein the variation of the OH content averaged across the thickness of the quartz glass blank does not exceed ± 50 ppm in the surface of the main functional direction.

5. The quartz glass blank according to one of the claims 1 to 4, **characterized in that** the fictitious temperature $T_f$ of the quartz glass blank does not exceed 950°C.

6. A method for the production of a quartz glass blank according to one of the claims 1 to 5, comprising the reshaping of a doped quartz glass obtained by means of flame hydrolysis of a compound containing silicon, and a compound containing titanium, or a compound containing titanium and fluorine, as a large-volume, rod-shaped base body into a homogenous quartz glass blank by means of several reshaping steps, wherein the base body held between two fasteners is initially brought to melt temperature zone-by-zone, and the heated zone is processed by means of a relative movement of both fasteners toward each other such that an essentially cylindrical drill body is created, which is subsequently softened in a heatable mold in at least one additional reshaping step, and shaped into a quartz glass blank under a force acting in the direction of the axis within the mold.

7. The method for the production of a quartz glass blank according to claim 6, **characterized in that** the fasteners and the base body are comprised of the same quartz glass material.

## Revendications

1. Ebauche de verre quartzeux pour un composant optique, pour transférer un rayonnement ayant une longueur d'onde de 15 nm et moins, à partir d'un verre quartzeux de haute pureté, dopé au titane ou par une combinaison de titane et de fluor, qui est **caractérisée par** les éléments caractéristiques suivants :

a) des micro-inhomogénéités sous l'effet d'une variance locale de la répartition du TiO$_2$ inférieure à 0,05 % TiO$_2$ moyennées sur un élément de volume de (5 $\mu$m)$^3$, par rapport à la valeur moyenne de la teneur en TiO$_2$ de l'ébauche de verre quartzeux,

b) une inhomogénéité maximale absolue du coefficient de dilatation thermique $\Delta\alpha$ dans la direction fonctionnelle principale sur la surface optiquement utilisée CA de l'ébauche de verre quartzeux, inférieure à 5 ppb/K,

c) une variation du $\Delta\alpha$ déterminée selon (b) sur la surface optique, qui peut être décrite essentiellement par la formule (1) :

$$\Delta a = C_0^\alpha + C_3^\alpha \left( 2 \left( \frac{r}{R} \right)^2 - 1 \right) + C_8^\alpha \left( 6 \left( \frac{r}{R} \right)^4 - 6 \left( \frac{r}{R} \right)^2 + 1 \right) \qquad (1)$$

et dont l'inhomogénéité résiduelle de la dilatation thermique après retrait de (1) n'est pas supérieure à 0,5 ppb/K, avec $C_0^\alpha \leq 5$ ppb/K ;

d) une variance radiale du coefficient de dilatation thermique sur la surface utile de l'ébauche de verre quartzeux au maximum égale à 0,4 ppb/(K.cm), et

e) une biréfringence par compression (SDB) à 633 nm dans la direction fonctionnelle principale, au maximum égale à 2 nm/cm, dont la variation peut pour l'essentiel être décrite par la formule (2) :

$$SDB = C_0^{SDB} + C_3^{SDB}\left(2\left(\frac{r}{R}\right)^2 - 1\right) + C_8^{SDB}\left(6\left(\frac{r}{R}\right)^4 - 6\left(\frac{r}{R}\right)^2 + 1\right) \quad (2)$$

dans laquelle r est la distance radiale de l'axe cylindrique ;

R est le rayon maximal de la surface optiquement utilisée CA ,

$C_0$, $C_3$, $C_8$ sont des paramètres d'adaptation des termes de Zernike sphériques ;

l'ébauche de verre quartzeux contenant 5 à 10 % en poids de $TiO_2$.

2. Ebauche de verre quartzeux selon la revendication 1, **caractérisée en ce que**, pour une combinaison linéaire des dopants $TiO_2$ et fluor, on a la règle de calcul suivante (3) :

$$\text{teneur en fluor [\% en poids]} = 4,5 - 0,614.(\text{teneur en } TiO_2) \text{ [\% en poids]} \quad (3)$$

3. Ebauche de verre quartzeux selon la revendication 1 ou 2, **caractérisée en ce que** la biréfringence par compression à 633 nm ne dépasse pas 5 nm/cm perpendiculairement à la direction fonctionnelle principale, sa plus grande partie étant due aux éléments basse fréquence, dont le gradient ne dépasse pas 50(nm/cm)/cm.

4. Ebauche de verre quartzeux selon l'une des revendications 1 à 3, **caractérisée en ce que** l'ébauche de verre quartzeux présente une teneur moyenne en 05 comprise dans la plage de 700 à 1 000 ppm en poids, la variation de la teneur en 05, moyennée sur l'épaisseur de l'ébauche de verre quartzeux, ne dépassant pas dans la surface de la direction fonctionnelle principale $\pm$ 50 ppm.

5. Ebauche de verre quartzeux selon l'une des revendications 1 à 4, **caractérisée en ce que** la température fictive $T_f$ de l'ébauche de verre quartzeux ne dépasse pas 950°C.

6. Procédé de fabrication d'une ébauche de verre quartzeux selon l'une des revendications 1 à 5, comprenant le formage d'un verre quartzeux, obtenu par hydrolyse à la flamme d'un composé contenant du silicium et d'un composé contenant du titane ou d'un composé contenant du titane et du fluor, sous forme d'un corps de départ de grand volume, en forme de barre, pour obtenir une ébauche de verre quartzeux homogène par plusieurs étapes de formage, le corps de départ étant d'abord, en étant maintenu entre deux supports, porté par zones à la température de fusion, la zone chauffée étant travaillée par le mouvement relatif des deux supports l'un vers l'autre, de façon à obtenir un corps de torsion pour l'essentiel cylindrique, qui ensuite, dans au moins une étape supplémentaire de formage, va être ramolli dans un moule chauffant, pour subir une déformation, sous une force agissant dans la direction de l'axe, sous forme d'une ébauche de verre quartzeux.

7. Procédé de fabrication d'une ébauche de verre quartzeux selon la revendication 6, **caractérisé en ce que** les supports et le corps de départ sont constitués du même matériau de verre quartzeux.

**Fig. 1**

**Fig. 2**

axial, Hauptfunktionsrichtung (1)

radial (2)

(4)

senkrecht zur
Hauptfunktionsrichtung (3)

**Fig. 3A**

**Fig. 3B**

**Fig. 3C**

## Fig. 4 A

Draufsicht

## Fig. 4B

Position (mm)

## Fig. 5A

## Fig.5B

**Fig. 6A, 6B**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0108163 A

**In der Beschreibung aufgeführte Nicht-Patentliteratur**

- **G.A. PAVLOVA ; A.N. AMATUNI.** Physicochemical Properties of Glasses with a Low Thermal Expansion Coefficient in the System SiO2-TiO. *Neorganicheskie Materialy,* September 1975, vol. 11 (9), 1686-1689
- **G.J. COPLEY ; A.D. REDMOND ; B. YATES.** The Influence of Titania upon the Thermal Expansion of Vitreous Silica. *Physics and Chemistry of Glasses,* August 1973, vol. 14 (4
- Ultra-Low-Expansion Glasses and Their Structure in the SiO2-TiO2 System. Amorphous Materials. WILEY-INTERSCIENCE, 1971, 453-461
- **ROBERT B. GREEGOR ; FARREL W. LYTLE ; DONALD R. SANDSTROM ; JOE WONG ; PETER SCHULTZ.** Investigation of TiO2-SiO2 Glasses by X-Ray Absorption Spectroscopy. *Journal of Non-Crystalline Solids,* 1983, vol. 55, 27-43
- Development of modified zero expansion Ti-dope silica glass for EUVL substrate. **Y. IWAHASHI ; S. KIKUGAWA ; A. KOIKE ; N. SUGIMOTO.** 2nd International Extreme Ultraviolett Symposium. 30. September 2003